# EUROPÄISCHE PATENTSCHRIFT

(11) **EP 2 201 235 B1**
(45) Veröffentlichungstag und Bekanntmachung des Hinweises auf die Patenterteilung: **03.04.2013**
(21) Anmeldenummer: 08803880.7
(22) Anmeldetag: 09.09.2008
(51) Int. Cl.: F02N 11/08

(54) **VERFAHREN UND VORRICHTUNG ZUM STEUERN EINER BRENNKRAFTMASCHINE**
METHOD AND APPARATUS FOR CONTROLLING AN INTERNAL COMBUSTION ENGINE
PROCÉDÉ ET DISPOSITIF POUR COMMANDER UN MOTEUR À COMBUSTION INTERNE

(30) Priorität: 14.09.2007 DE 102007043908
(43) Veröffentlichungstag der Anmeldung: 30.06.2010
(73) Patentinhaber: Robert Bosch GmbH, 70442 Stuttgart (DE)
(72) Erfinder: ZELL, Helmut, 89075 Ulm (DE); PAPE, Andreas, 71739 Oberriexingen (DE)
(86) Internationale Anmeldenummer: PCT/EP2008/061912
(87) Internationale Veröffentlichungsnummer: WO 2009/037150

(56) Entgegenhaltungen:
- EP-A- 1 279 815
- DE-A1- 10 201 889
- DE-A1- 10 331 240
- US-B1- 6 664 651

## Beschreibung

### Stand der Technik

Die Erfindung geht aus von einem Verfahren beziehungsweise einer Vorrichtung zur Steuerung einer mit Kraftstoff betriebenen Brennkraftmaschine eines Kraftfahrzeugs mit den Merkmalen des Oberbegriffs der unabhängigen Ansprüche.

In Kraftfahrzeugen ist üblicherweise zur Speicherung des Kraftstoffs ein Kraftstofftank vorhanden. Der Kraftstofftank ist mit einem Tankentlüftungssystem ausgerüstet. Das Tankentlüftungssystem dient dem Verschließen des Tankes, damit nicht Kraftstoff oder Kraftstoffdämpfe unkontrolliert aus dem Tank austreten. Mittels einem steuerbaren Tankentlüftungssystem kann ein Tankentlüftungsventil geöffnet werden und der Druck kontrolliert verändert werden.

Aus der US 5371412 ist ein Hybridfahrzeug bekannt, bei dem in Abhängigkeit der Beladung des Aktivkohlefilters im Tankentlüftungssystem eine Brennkraftmaschine startet oder abschaltet. Aus der US 6 664 651 ist eine Verzögerung oder eine Unterbindung einer Abschaltung einer Brennkraftmaschine abhängig von diversen Bedingungen bekannt. Aus der DE 103 31 240 ist ein Verbieten der Abschaltung einer Brennkraftmaschine bei Vorliegen bestimmter Systemfehler bekannt. Aus der EP 1 279 815 ist eine Diagnose eines Tankentlüftungssystems bekannt, wobei ein Fehlerfall angezeigt wird.

### Offenbarung der Erfindung

Die vorliegende Erfindung geht aus von einem Verfahren bzw. einer Vorrichtung gemäß den unabhängigen Ansprüchen 1 und 7. Es handelt sich um ein Verfahren und eine Vorrichtung zur Steuerung einer mit Kraftstoff betriebenen Brennkraftmaschine eines Kraftfahrzeugs. In dem Kraftfahrzeug ist ein einem Kraftstofftank zugeordnetes Tankentlüftungssystem vorgesehen, welches wenigstens zwei Betriebszustände aufweist. Weiterhin wird bei der Steuerung die Brennkraftmaschine automatisch gemäß einer Abschaltstrategie abgeschaltet.

Der Kern der Erfindung besteht darin, dass die Abschaltstrategie den aktuellen Betriebszustand des Tankentlüftungssystems berücksichtigt bzw. dass Mittel vorgesehen sind, mittels derer die Abschaltstrategie den aktuellen Betriebszustand des Tankentlüftungssystems berücksichtigt

Die Erfindung hat den Vorteil, dass nach einer bestimmungsgemäßen Abschaltung der Brennkraftmaschine gemäß der Abschaltstrategie ein zuverlässiger Startvorgang der Brennkraftmaschine sichergestellt ist Insbesondere bei bekannten Hybridfahrzeugen, die neben einer Brennkraftmaschine auch einen Elektromotor zum Antrieb aufweisen, oder bei sogenannten Start/Stop-Steuerungen der Brennkraftmaschine wird die Brennkraftmaschine im Betrieb des Fahrzeugs bestimmungsgemäß abgeschaltet. Dies geschieht beispielweise im Leerlauf der Brennkraftmaschine während sich das Fahrzeug vor einer Ampel in einer Wartephase befindet Durch die Erfindung wird ein sicherer erneuter Start der Brennkraftmaschine nach einer solchen Abschaltung gewährleistet. Dies hat folgenden technischen Hintergrund:

Bei erneutem Start der Brennkraftmaschine ist das Tankentlüftungsventil normalerweise zunächst geschlossen bevor eine normale Tankentlüftungsphase beginnt. Lässt sich das Ventil jedoch nicht schließen, so kann die Brennkraftmaschine unter Umständen deshalb nicht wieder gestartet werden, weil das nicht geschlossene Ventil zu einer hohen Konzentration von Kraftstoffdämpfen im Ansaugbereich der Brennkraftmaschine führt. Die Kohlenwasserstoff-Beladung des Aktivkohlefilters strömt in diesem Fall ungehindert der Brennkraftmaschine zu. Überschreitet diese Konzentration einen Grenzwert, so lässt sich die Brennkraftmaschine nicht mehr starten, da das Kraftstoff/Luft-Gemisch zu fett ist.

Dies ist insbesondere bei Hybridfahrzeugen oder bei Fahrzeugen mit einer Start/Stop-Steuerung der Brennkraftmaschine kritisch, da dann z.B. ein Startvorgang an einer Ampel oder das schnelle Losfahren an einer Kreuzung nicht oder nur eingeschränkt durchgeführt werden kann. Die Erfindung trägt damit insgesamt zu einem sicheren Betrieb des Kraftfahrzeugs bei.

Erfindungsgemäβ ist vorgesehen, dass als Betriebszustände wenigstens ein erster Zustand einen ordnungsgemäßen Zustand des Tankentlüftungssystems repräsentiert und wenigstens ein zweiter Zustand einen fehlerhaften Zustand des Tankentlüftungssystems repräsentiert Ein ordnungsgemäßer Zustand des Tankentlüftungssystems kann dann vorliegen, wenn eine Steuerung wunschgemäß das Tankentlüftungsventil öffnen und schließen kann. Ein fehlerhafter Zustand des Tankentlüftungssystems kann dann vorliegen, wenn ein wunschgemäßes Öffnen und Schließen des Tankentlüftungsventils nicht möglich ist. In Abhängigkeit des aktuellen Betriebszustandes kann die Abschaltstrategie den sicheren Betrieb des Fahrzeuges gewährleisten.

Erfindugsgemäß ist weiterhin vorgesehen, dass die Abschaltstrategie bei einem als fehlerhaft erkannten Tankentlüftungssystem die Brennkraftmaschine nicht oder verzögert abgeschaltet. Wie schon erwähnt kann in Folge eines defekten Tankentlüftungsventils das Start-Verhalten einer Brennkraftmaschine negativ beeinflusst werden. Bei Erkennung eines fehlerhaften Tankentlüftungsventils wird daher die Brennkraftmaschine nicht mehr oder deutlich restriktiver abgeschaltet, um einen sicheren Betrieb zu gewährleisten. Durch die in den abhängigen Ansprüchen aufgeführten Maßnahmen sind vorteilhafte Weiterbildungen und Verbesserungen der im unabhängigen Anspruch angegebenen Vorrichtung möglich.

In einer vorteilhaften Ausgestaltung der Erfindung ist vorgesehen, dass das Tankentlüftungssystem wenigstens aus einem Tankentlüftungsventil und/oder einer Ansteuerung des Tankentlüftungsventils besteht. Für die Gewährleistung eines sicheren Betriebs und einer raschen Fehlerbehebung ist es sinnvoll, das Tankentlüftungssystem als System einer Vielzahl von Komponenten zu betrachten. Eine Ausweitung der Überwachungsfunktion auf einzelne Komponenten des Systems ermöglicht eine spezifischere Anpassung der Abschaltstrategie an die unterschiedlichen Betriebszustände des Tankentlüftungssystems.

In einer weiteren vorteilhaften Ausgestaltung der Erfindung ist vorgesehen, dass die Abschaltstrategie Betriebszustände und/oder Fahrzustände des Kraftfahrzeugs berücksichtigt. So kann beispielweise ein Ladezustand einer Batterie einen Betriebszustand eines Hybridfahrzeuges repräsentieren. Bei geringem Ladezustand der Batterie, sollte die Abschaltstrategie der Brennkraftmaschine deutlich restriktiver vorgenommen werden als bei einem höheren Ladezustand. Ein Fahrzustand dagegen könnte beispielsweise der Betrieb des Fahrzeuges im Leerlauf, der Schubbetrieb oder die Anhaltephase eines Fahrzeuges mit Start/Stopp-Automatik repräsentieren. In diesen Fahrzuständen bietet sich ein Abschalten der Brennkraftmaschine an, solange keine anderen Systeme einen Weiterbetrieb erfordern.

In einer weiteren besonders vorteilhaften Ausgestaltung der Erfindung ist vorgesehen, dass das Tankentlüftungssystem wenigstens dann als fehlerhaft erkannt wird, wenn sich das Tankentlüftungsventil nicht schließen lässt und/oder dessen Ansteuerung das Schließen des Ventils nicht erlaubt. Dies kann, wie oben beschrieben, zu der hohen Konzentration von Kraftstoffdämpfen im Ansaugbereich der Brennkraftmaschine und damit zu Startproblemen führen.

In einer weiteren vorteilhaften Ausgestaltung der Erfindung ist vorgesehen, dass zur Bestimmung des Betriebszustands des Tankentlüftungssystems eine Reaktion einer Motorsteuerung, insbesondere ein Ergebnis einer Tankleckdiagnose und/oder ein Ergebnis der Leerlauf- und/oder Lambda-Regelung durch ein Öffnen des Tankentlüftungsventils, verwendet wird. Mittels dieser Diagnosemöglichkeiten kann ein nicht mehr schließendes Tankentlüftungsventil sicher erkannt werden. Die Abschaltstrategie kann damit bei Bedarf sinnvoll angepasst werden.

Ausführungsbeispiele der Erfindung sind in den Zeichnungen dargestellt und in der nachfolgenden Beschreibung näher erläutert.

Es zeigen
Figur 1 eine Vorrichtung zur Steuerung einer Brennkraftmaschine.
Figur 2 ein Verfahren zur Steuerung einer Brennkraftmaschine.

### Ausführungsformen der Erfindung

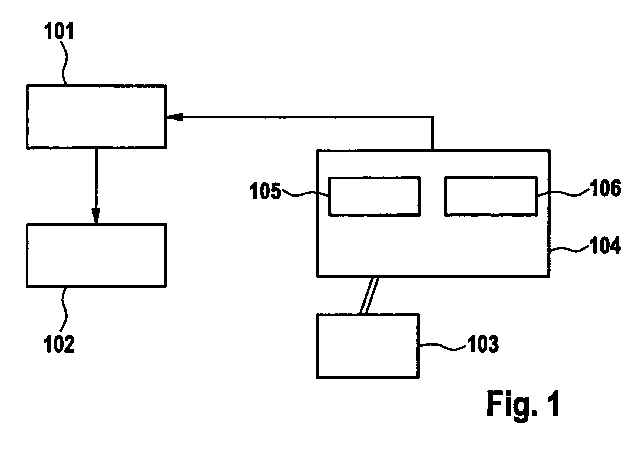

In der Figur 1 ist eine Vorrichtung zur Steuerung einer Brennkraftmaschine gezeigt. Mit dem Mittel (101) wird eine Brennkraftmaschine (102) gesteuert. Der Brennkraftmaschine zugeordnet ist ein Kraftstofftank (103), welcher mit einem Tankentlüftungssystem (104) ausgerüstet ist. Das Tankentlüftungssystem (104) besteht aus dem Tankentlüftungsventil (105) und der Ansteuerung (106) für das Tankentlüftungsventil (105). Der Betriebszustand des Tankentlüftungssystems wird als Eingangsgröße an das Mittel (101) übertragen.

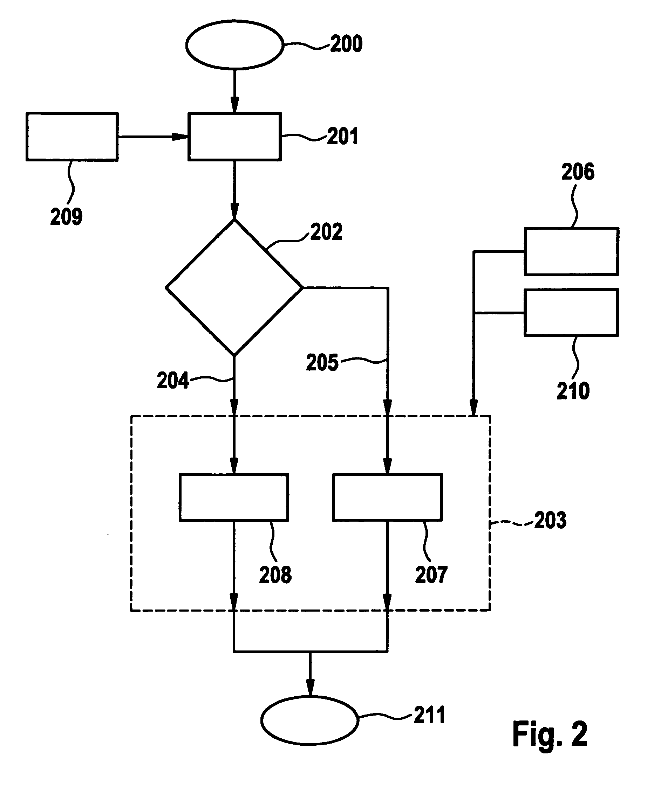

In der Figur 2 ist ein Verfahren zur Steuerung einer Brennkraftmaschine gezeigt.

Block (200) kennzeichnet den Start des Verfahrens, Block (211) kennzeichnet das Ende des Verfahrens.

In Block (209) wird der Betriebszustand des Tankentlüftungssystems diagnostiziert.

Wie oben erwähnt, kann zur Bestimmung des Betriebszustands des Tankentlüftungssystems eine Tankleckdiagnose durchgeführt und ausgewertet werden. Aber auch aus dem Regelverhalten der Leerlauf- oder Lambda-Regelung nach Öffnen des Tankentlüftungsventils kann auf den Betriebszustand des Tankentlüftungssystems geschlossen werden.

In Block (201) wird der aktuelle Betriebszustand des Tankentlüftungssystems eingelesen. In der Abfrage (202) wird überprüft, ob der aktuelle Betriebszustand des Tankentlüftungssystems ordnungsgemäß (204) oder fehlerhaft (205) ist. Ein ordnungsgemäßer Zustand des Tankentlüftungssystems kann dann vorliegen, wenn eine Steuerung wunschgemäß das Tankentlüftungsventil öffnen und schließen kann. Ein fehlerhafter Zustand des Tankentlüftungssystems kann dann vorliegen, wenn ein wunschgemäßes Öffnen und Schließen des Tankentlüftungsventils nicht möglich ist. So lässt sich ein klemmendes Ventil nicht mehr wunschgemäß steuern. Es kann im geschlossenen Zustand klemmen, dann ist eine gesteuerte Entlüftung des Tankes nicht mehr möglich. Es kann aber auch in einem teilweise bis ganz geöffneten Zustand klemmen. So treten Kraftstoffdämpfe unkontrolliert aus dem Tank. Sowohl die Umwelt wird dadurch belastet als auch die Funktions- und Startfähigkeit der Brennkraftmaschine unter Umständen beeinträchtigt oder sogar verhindert.

Das Ausgangssignal des Abfrageblocks (202) ist das Eingangssignal der Abschaltstrategie (203). Je nach Betriebszustand wird eine normale Abschaltstrategie (208) oder eine modifizierte Abschaltstrategie (207) durchgeführt.

Die normale Abschaltstrategie schaltet die Brennkraftmaschine gemäß eines Abschaltbefehls, zum Beispiel aufgrund vom Leerlaufbetrieb der Brennkraftmaschine, ab. Bei der modifizierten Abschaltstrategie wird die Brennkraftmaschine zunächst oder dauerhaft weiterbetrieben, wenn im Abfrageblock weiterhin erkannt wird, dass das Tankentlüftungssystem fehlerhaft arbeitet und ein erneutes Starten nach Abschalten der Brennkraftmaschine nicht sichergestellt werden kann.

Weitere Eingangsgrößen der Abschaltstrategie (207) sind die Betriebszustände (206) und die Fahrzustände (210) des Fahrzeugs. Wie obern erwähnt, handelt es sich dabei zum Beispiel um einen Ladezustand einer Batterie eines Hybridfahrzeuges oder den Betrieb im Leerlauf, den Schubbetrieb oder die Anhaltephase eines Fahrzeuges mit Start/Stopp-Automatik.

Die genannten Schritte können zyklisch wiederholt und abgearbeitet werden.

## Patentansprüche

1. Verfahren zur Steuerung einer mit Kraftstoff betriebenen Brennkraftmaschine (102) eines Kraftfahrzeugs mit einem einem Kraftstofftank (103) zugeordneten und wenigstens zwei Betriebszustände (204, 205) aufweisenden Tankentlüftungssystem (104), bei dem die Brennkraftmaschine (102) automatisch gemäß einer Abschaltstrategie (203) abgeschaltet wird,
wobei die Abschaltstrategie (203) den aktuellen Betriebszustand (204, 205) des Tankentlüftungssystems (104) berücksichtigt und
als Betriebszustände (204, 205) wenigstens ein erster Zustand (204) einen ordnungsgemäßen Zustand des Tankentlüftungssystems repräsentiert und wenigstens ein zweiter Zustand (205) einen fehlerhaften Zustand des Tankentlüftungssystems (104) repräsentiert,
**dadurch gekennzeichnet, dass** die Abschaltstrategie (203) derart ausgestaltet ist, dass bei einem als fehlerhaft erkannten Tankentlüftungssystem (104) die Brennkraftmaschine (102) nicht oder verzögert abgeschaltet wird.

2. Verfahren nach Anspruch 1, **dadurch gekennzeichnet, dass** das Tankentlüftungssystem (104) wenigstens aus einem Tankentlüftungsventil (105) und/oder einer Ansteuerung (106) des Tankentlüftungsventils (105) besteht.

3. Verfahren nach mindestens einem der vorhergehenden Ansprüche, **dadurch gekennzeichnet, dass** die Abschaltstrategie (203) Betriebszustände (206) und/oder Fahrzustände (210) des Kraftfahrzeugs berücksichtigt, wobei insbesondere vorgesehen ist,
- dass der Betriebszustand wenigstens durch den Ladezustand wenigstens eines, insbesondere elektrischen, Energiespeichers repräsentiert wird und/oder
- dass der Fahrzustand wenigstens dadurch repräsentiert wird, dass sich das Fahrzeug in einem solchen Modus befindet, während dem die Brennkraftmaschine wenigstens zeitweise abgeschaltet wird.

4. Verfahren nach mindestens einem der vorhergehenden Ansprüche, **dadurch gekennzeichnet, dass** das Tankentlüftungssystem (104) wenigstens dann als fehlerhaft erkannt wird, wenn sich das Tankentlüftungsventil (105) nicht schließen lässt und/oder dessen Ansteuerung (106) das Schließen des Ventils nicht erlaubt

5. Verfahren nach mindestens einem der vorhergehenden Ansprüche, **dadurch gekennzeichnet, dass** zur Bestimmung des Betriebszustands des Tankentlüftungssystems (104) eine Reaktion einer Motorsteuerung (209), insbesondere ein Ergebnis einer Tankleckdiagnose und/oder ein bestimmtes Verhalten der Leerlauf- und/oder Lambda-Regelung nach Öffnen des Tankentlüftungsventils, verwendet wird.

6. Verfahren nach Anspruch 1, **dadurch gekennzeichnet, dass**
- dann wenn der aktuelle Betriebszustand (204, 205) des Tankentlüftungssystems (104) einen fehlerfreien Zustand repräsentiert, die Abschaltstrategie (203) derart ausgestaltet ist, dass während eines Leerlaufs oder eines Schubbetriebs nach vorgebbaren Bedingungen die Brennkraftmaschine abgeschaltet wird, und
- dann wenn der aktuelle Betriebszustand (204, 205) des Tankentlüftungssystems (104) einen fehlerhaften Zustand repräsentiert, die Abschaltstrategie (203) derart ausgestaltet ist, dass während eines Leerlaufs oder eines Schubbetriebs nach vorgebbaren Bedingungen die Brennkraftmaschine nicht oder verzögert abgeschaltet wird.

7. Vorrichtung zur Steuerung einer mit Kraftstoff betriebenen Brennkraftmaschine (102) eines Kraftfahrzeugs mit einem einem Kraftstofftank (103) zugeordneten und wenigstens zwei Betriebszustände (204, 205) aufweisendes Tankentlüftungssystem (104), wobei Mittel (101) vorgesehen sind, mittels der die Brennkraftmaschine automatisch gemäß einer Abschaltstrategie (203) abgeschaltet wird,
wobei die Mittel (101) derart ausgestaltet sind, dass die Abschaltstrategie (203) den aktuellen Betriebszustand (204,205) des Tankentlüftungssystems (104) berücksichtigt und
als Betriebszustände (204, 205) wenigstens ein erster Zustand (204) einen ordnungsgemäßen Zustand des Tankentlüftungssystems repräsentiert und wenigstens ein zweiter Zustand (205) einen fehlerhaften Zustand des Tankentlüftungssystems (104) repräsentiert,
**dadurch gekennzeichnet, dass** die Abschaltstrategie (203) derart ausgestaltet ist, dass bei einem als fehlerhaft erkannten Tankentlüftungssystem (104) die Brennkraftmaschine (102) nicht oder verzögert abgeschaltet wird.

## Claims

1. Method for controlling an internal combustion engine (102), operated with fuel, of a motor vehicle having a tank-venting system (104) which is assigned to a fuel tank (103) and has at least two operating states (204, 205), in which method the internal combustion engine (102) is deactivated automatically according to a deactivation strategy (203),
wherein the deactivation strategy (203) takes into account the current operating state (204, 205) of the tank-venting system (104) and
as operating states (204, 205) at least a first state (204) represents a satisfactory state of the tank-venting system and at least one second state (205) represents a faulty state of the tank-venting system (104),
**characterized in that** the deactivation strategy (203) is configured in such a way that in the case of a tank-venting system (104) which is detected as being faulty the internal combustion engine (102) is not deactivated or is deactivated after a delay.

2. Method according to Claim 1, **characterized in that** the tank-venting system (104) is composed of at least one tank-venting valve (105) and/or an actuation means (106) of the tank-venting valve (105).

3. Method according to at least one of the preceding claims, **characterized in that** the deactivation strategy (203) takes into account operating states (206) and/or driving states (210) of the motor vehicle, wherein, in particular, there is provision
- that the operating state is represented at least by the charge state of at least one, in particular electrical, energy accumulator, and/or
- **in that** the drive state is represented at least by the fact that the vehicle is in a mode during which the internal combustion engine is at least temporarily deactivated.

4. Method according to at least one of the preceding claims, **characterized in that** the tank-venting system (104) is detected as faulty at least when the tank-venting valve (105) cannot be closed and/or the actuation means (106) thereof does not permit closing of the valve.

5. Method according to at least one of the preceding claims, **characterized in that** a reaction of an engine controller (209), in particular a result of a tank leakage diagnosis and/or a specific behaviour of the idling controller and/or lambda controller after the tank-venting valve opens, is used to determine the operating state of the tank-venting system (104).

6. Method according to Claim 1, **characterized in that**
- when the current operating state (204, 205) of the tank-venting system (104) represents a fault-free state, the deactivation strategy (203) is configured in such a way that during idling or during an overrun mode the internal combustion engine is deactivated according to predefinable conditions, and
- when the current operating state (204, 205) of the tank-venting system (104) represents a faulty state, the deactivation strategy (203) is configured in such a way that during idling or during an overrun mode the internal combustion engine is not deactivated or is deactivated with a delay according to predefinable conditions.

7. Apparatus for controlling an internal combustion engine (102), operated with fuel, of a motor vehicle having a tank-venting system (104) which is assigned to a fuel tank (103) and has at least two operating states (204, 205), wherein means (101) are provided by means of which the internal combustion engine is deactivated automatically according to a deactivation strategy (203),
wherein the means (101) are configured in such a way that the deactivation strategy (203) takes into account the current operating state (204, 205) of the tank-venting system (104), and
as operating states (204, 205) at least a first state (204) represents a satisfactory state of the tank-venting system and at least a second state (205) represents a faulty state of the tank-venting system (104),
**characterized in that** the deactivation strategy (203) is configured in such a way that in the case of a tank-venting system (104) which is detected as faulty the internal combustion engine (102) is not deactivated or is deactivated with a delay.

## Revendications

1. Procédé pour commander un moteur à combustion interne (102) d'un véhicule automobile alimenté avec du carburant, comprenant un système de ventilation du réservoir (104) associé à un réservoir de carburant (103) et présentant au moins deux états de fonctionnement (204, 205), dans lequel le moteur à combustion interne (102) est automatiquement coupé selon une stratégie de coupure (203),
la stratégie de coupure (203) tenant compte de l'état de fonctionnement actuel (204, 205) du système de ventilation du réservoir (104) et en tant qu'états de fonctionnement (204, 205) au moins un premier état (204) représentant un état conforme du système de ventilation du réservoir et au moins un deuxième état (205) représentant un état de défaillance du système de ventilation du réservoir (104),
**caractérisé en ce que** la stratégie de coupure (203) est configurée de telle sorte que dans le cas d'un système de ventilation du réservoir (104) détecté comme défaillant, le moteur à combustion interne (102) n'est pas coupé ou est coupé de manière retardée.

2. Procédé selon la revendication 1, **caractérisé en ce que** le système de ventilation du réservoir (104) se compose au moins d'une soupape de ventilation du réservoir (105) et/ou d'une commande (106) de la soupape de ventilation du réservoir (105).

3. Procédé selon au moins l'une quelconque des revendications précédentes, **caractérisé en ce que** la stratégie de coupure (203) tient compte d'états de fonctionnement (206) et/ou d'états de conduite (210) du véhicule automobile, et il est notamment prévu
- que l'état de fonctionnement soit représenté au moins par l'état de charge d'au moins un accumulateur d'énergie, notamment électrique, et/ou
- que l'état de conduite soit représenté au moins par le fait que le véhicule se trouve dans un mode durant lequel le moteur à combustion interne est au moins en partie coupé.

4. Procédé selon au moins l'une quelconque des revendications précédentes, **caractérisé en ce que** le système de ventilation du réservoir (104) est au moins détecté comme défaillant lorsque la soupape de ventilation du réservoir (105) ne peut pas se fermer et/ou lorsque sa commande (106) ne permet pas la fermeture de la soupape.

5. Procédé selon au moins l'une quelconque des revendications précédentes, **caractérisé en ce que** pour déterminer l'état de fonctionnement du système de ventilation du réservoir (104), on utilise une réaction d'une commande du moteur (209), notamment un résultat d'un diagnostic de fuite du réservoir et/ou un comportement déterminé de la régulation de fuite et/ou de la régulation lambda après ouverture de la soupape de ventilation du réservoir.

6. Procédé selon la revendication 1, **caractérisé en ce que**
- si l'état de fonctionnement actuel (204, 205) du système de ventilation du réservoir (104) représente un état sans défaillance, la stratégie de coupure (203) est configurée de telle sorte que pendant une marche à vide ou un fonctionnement en mode de poussée selon des conditions prédéfinissables, le moteur à combustion interne est coupé, et
- si l'état de fonctionnement actuel (204, 205) du système de ventilation du réservoir (104) représente un état défaillant, la stratégie de coupure (203) est configurée de telle sorte que pendant une marche à vide ou un fonctionnement en mode de poussée selon des conditions prédéfinissables, le moteur à combustion interne ne soit pas coupé ou soit coupé de manière retardée.

7. Dispositif de commande d'un moteur à combustion interne (102) d'un véhicule automobile alimenté avec du carburant, comprenant un système de ventilation du réservoir (104) associé à un réservoir de carburant (103) et présentant au moins deux états de fonctionnement (204, 205), des moyens (101) étant prévus au moyen desquels le moteur à combustion interne est coupé automatiquement conformément à une stratégie de coupure (203),
les moyens (101) étant configurés de telle sorte que la stratégie de coupure (203) tienne compte de l'état de fonctionnement actuel (204, 205) du système de ventilation du véhicule (104) et
en tant qu'états de fonctionnement (204, 205) au moins un premier état (204) représentant un état conforme du système de ventilation du réservoir et au moins un deuxième état (205) représentant un état de défaillance du système de ventilation du réservoir (104),
**caractérisé en ce que** la stratégie de coupure (203) est configurée de telle sorte que dans le cas d'un système de ventilation du réservoir (104) détecté comme défaillant, le moteur à combustion interne (102) n'est pas coupé ou est coupé de manière retardée.
